# EUROPÄISCHE PATENTSCHRIFT

(11) **EP 3 763 557 B1**
(45) Veröffentlichungstag und Bekanntmachung des Hinweises auf die Patenterteilung: **30.08.2023**
(21) Anmeldenummer: 20184129.3
(22) Anmeldetag: 06.07.2020
(51) Int. Cl.: B60L 53/14, B60L 53/30, B60L 53/35, B25J 15/00, B25J 18/00, B25J 19/00

(54) **AUTOMATISIERTES VERBINDEN VON EINEM LADESTECKER MIT EINER LADESCHNITTSTELLE EINES FAHRZEUGS**
AUTOMATED CONNECTION OF A CHARGING CONNECTOR TO A CHARGING INTERFACE OF A VEHICLE
RACCORDEMENT AUTOMATISÉ D'UNE PRISE DE CHARGE À UNE INTERFACE DE CHARGE D'UN VÉHICULE

(30) Priorität: 08.07.2019 DE 102019210042
(43) Veröffentlichungstag der Anmeldung: 13.01.2021
(73) Patentinhaber: VOLKSWAGEN AG, 38440 Wolfsburg (DE); KUKA Deutschland GmbH, 86165 Augsburg (DE)
(72) Erfinder: Schütz, Daniel, 38165 Lehre (DE); Settele, Norbert, 86574 Willprechtszell (DE)
(74) Vertreter: Patentanwälte Bressel und Partner mbB

(56) Entgegenhaltungen:
- WO-A1-2020/159028
- WO-A2-2020/084111
- DE-A1-102016 014 463
- DE-A1-102018 104 762
- DE-B3-102018 111 008

## Beschreibung

Die Erfindung betrifft eine Anordnung zum Verbinden eines Ladesteckers mit einer Ladeschnittstelle eines Fahrzeugs, ein Werkzeug für eine solche Anordnung und ein Verfahren zum Verbinden eines Ladesteckers mit einer Ladeschnittstelle eines Fahrzeugs. Allgemein betrifft die Erfindung das Gebiet der automatisierten und insbesondere mit einem Industrieroboter durchgeführten Montage, wobei sich die Montage auf das Verbinden und insbesondere Zusammenstecken eines Ladesteckers und einer Ladeschnittstelle bezieht.

Fahrzeuge, wobei es sich im Rahmen der hierin offenbarten Lösung bevorzugt um Kraftfahrzeuge und insbesondere Personenkraftwagen oder Lastkraftwagen handeln kann, mit elektrischen Energiespeichern sind bekannt. Es kann sich hierbei um rein elektrisch angetriebene oder um sogenannte Hybridfahrzeuge handeln, die nur teilweise elektrisch angetrieben werden. Zum Versorgen der Energiespeicher mit elektrischer Energie müssen die Fahrzeuge mit elektrischen Ladevorrichtungen verbunden werden. Hierbei handelt es sich typischerweise um Ladestationen oder Ladesäulen, die einen Ladestecker aufweisen. Letzterer kann mit einer Ladeschnittstelle (zum Beispiel umfassend eine Steckdose) des Fahrzeugs verbunden werden. Prinzipiell wäre es erfindungsgemäß aber auch denkbar, den Ladestecker in Form einer Steckdose auszuführen, der dann zum Beispiel hervorstehende Steckkontakte der Fahrzeug-Ladeschnittstelle aufnimmt.

Es ist in verschiedenen Zusammenhängen wünschenswert, das Verbinden des Ladesteckers mit einer Ladeschnittstelle des Fahrzeugs automatisiert durchzuführen. Hierfür sollen insbesondere Roboter und / oder allgemein ansteuerbare Bewegungsapparate zum Einsatz kommen. Ein Beispiel hierfür findet sich in der DE 10 2012 216 980 A1. In diesem Fall ist der Ladestecker in den dort verwendeten Roboter fest integriert. Somit kann nur ein bestimmter Typ von Ladeschnittstelle, zu der der entsprechende Ladestecker passt, mit Strom versorgt werden und die Flexibilität dieser Lösung ist vergleichsweise gering. Die DE 10 2016 123 188 A1 offenbart einen Laderoboter mit einem Justiermittel, mit dem eine Kontaktierungseinrichtung (Ladestecker) relativ zu einer Fahrzeug-Ladeschnittstelle justierbar und somit ausrichtbar ist. Dies wird bevorzugt manuell ausgeführt. Auch eine automatische Justierung wird angesprochen, aber nicht ausführlich erläutert. Hierfür dürfte aber ein erheblicher Aufwand an Messvorrichtungen erforderlich sein, um zu ermitteln, ob die richtige Lage erreicht wurde. Zudem müssten eine Vielzahl von Bewegungsachsen zusätzlich zu denen des Industrieroboters vorgesehen werden. Die DE 10 2015 213 161 A1 offenbart ferner eine Lösung für das automatisierte Stecken von Ladesteckern mit kraftgeregelten Aktoren.

Die bekannten Ansätze zeichnen sich vor allem dadurch aus, dass sie zu einem korrekten Einstecken des Ladesteckers in die Ladeschnittstelle eine aufwendige Sensorik benötigen (zum Beispiel zum Ermitteln der Lage der Ladeschnittstelle und / oder für eine Kraftregelung). Ebenso können durch Vorsehen einer Vielzahl von Bewegungsachsen zusätzlich zu etwaigen Roboterachsen die Kosten und die Komplexität erhöht werden.

Weiterer Stand der Technik existiert in Form der DE 10 2018 111 008 B3. Dort ist eine Ladeeinrichtung mit einer Bewegungseinrichtung zur Bewegung eines Ladesteckers offenbart, der sich durch unterschiedliche Bewegungsmodi auszeichnet.

Die WO 2020/084111 A2 offenbart ferner eine Vorrichtung zum automatisierten Laden eines Fahrzeugs, die einen Roboterarm mit Schubgelenken umfasst, um einen Verbinder in einen komplementären Verbinder eines Fahrzeugs einzustecken. Dieses Dokument ist erst nach dem Prioritätstag der vorliegenden Anmeldung angemeldet und veröffentlicht worden.

Auch die DE 10 2018 104 762 A1 ist erst nach dem Prioritätstag der vorliegenden Anmeldung veröffentlicht worden. Sie offenbart eine Lösung zum selbsttätigen Verbinden/Trennen eines Aufladeanschlusses mit einer Aufladeanschlussaufnahme eines Fahrzeugs. Dabei ist eine Positionierungseinheit eingerichtet, den Aufladeanschluss entlang einer Einsteckrichtung in die Aufladeanschlussaufnahme hineinzubewegen bzw. herauszubewegen, wobei dies unter Erzeugung von Schwingungen mittels einer Vibrationseinheit erfolgen kann.

Die DE 10 2016 014 463 A1 offenbart die Versorgung eines Kraftfahrzeugs mittels eines Robotersystems, das eine Roboteranordnung mit wenigstens einem mobilen Roboter aufweist.

Nachveröffentlichter Stand der Technik existiert zudem in der WO 2020/159028 A1.

Es besteht somit ein Bedarf dafür, dass automatisierte Verbinden von Ladesteckern mit Ladeschnittstellen eines Fahrzeugs zu verbessern.

Diese Aufgabe wird durch eine Anordnung mit den Merkmalen von Anspruch 1, ein Werkzeug mit den Merkmalen von Anspruch 6 und ein Verfahren mit den Merkmalen von Anspruch 7 gelöst. Vorteilhafte Weiterbildungen sind in den abhängigen Ansprüchen angegeben. Es versteht sich, dass sämtliche der einleitenden Bemerkungen und Merkmale auch bei der vorliegenden Erfindung vorgesehen sein beziehungsweise auf diese zutreffen können, sofern nicht anders angegeben oder ersichtlich.

Ein Grundgedanke der Erfindung besteht darin, den Verbindungsvorgang zum Verbinden von Ladesteckern und Ladeschnittstellen in unterschiedliche Aufgaben zu unterteilen und diese mit unterschiedlichen und / oder aufeinander aufbauenden Komponenten zu bewerkstelligen. So ist bevorzugt vorgesehen, den Ladestecker in einem Werkzeug, das von einem Bewegungsapparat wie zum Beispiel einem Industrieroboter geführt wird, zu zentrieren. Letzteres kann das Ausrichten des Ladesteckers mit einer gewünschten Position und Orientierung in dem Werkzeug umfassen. Das Werkzeug selbst kann hingegen fest an dem Bewegungsapparat angeordnet sein und insbesondere mit einer bekannten Orientierung daran befestigt sein. Infolge der Zentrierung kann somit zum Beispiel in einem Koordinatensystem des Bewegungsapparats oder allgemein relativ zu dem Werkzeug und / oder Bewegungsapparat eine Position des Ladesteckers als bekannt und konstant angenommen werden. Durch Ansteuern der Bewegungsachsen des Bewegungsapparats kann somit die Position und / oder Orientierung des Ladesteckers gezielt eingestellt werden.

Weiter ermöglicht die Zentrierung aber auch, dass der Ladestecker relativ zu einer Bewegungsachse im Werkzeug geeignet ausgerichtet ist. Dieser kann dann von der Bewegungsachse in einer ebenfalls bekannten und für jeden Ladestecker gleichen Weise verlagert werden und folglich allgemein definiert mit der Bewegungsachse bewegbar sein. Insbesondere kann der Ladestecker mit der Bewegungsachse linear bewegt und / oder translatorisch verschoben werden, vorzugsweise in Richtung der Ladeschnittstelle.

Die Erfindung sieht es demnach vor, den Ladestecker mit dem Bewegungsapparat in einer vorbestimmten Relativlage relativ zu der Ladeschnittstelle zu positionieren. Hierfür kann die Ladeschnittstelle und insbesondere eine Lage hiervon sensorisch erfasst werden, wofür jedoch einfache Sensoren und / oder allgemein eine Groberfassung der Lage ausreichend sind. Beispielsweise kann die Anordnung hierfür wenigstens einen Kamerasensor umfassen. Die Lage der Ladeschnittstelle kann dann zum Beispiel mittels Mustererkennung oder allgemeinen Bildauswerte-Algorithmen ermittelt werden (zum Beispiel von wenigstens einer Steuereinrichtung der Anordnung).

Die Positionierung mit dem Bewegungsapparat erfolgt erfindungsgemäß derart, dass anschließend nur noch eine bevorzugt einachsige Bewegung mit der Bewegungsachse des Werkzeugs erforderlich ist, um den Ladestecker vollständig mit der Ladeschnittstelle zu verbinden. Im Rahmen dieser Offenbarung können der Ladestecker und die Ladeschnittstelle als verbunden bezeichnet werden, wenn diese einen vorbestimmten Eingriffszustand erreicht haben und insbesondere elektrisch leitend miteinander verbunden sind. Der vorbestimmte Eingriffszustand kann durch vollständiges Ineinanderschieben und / oder Erreichen wenigstens eines Anschlags zum Beispiel beim Einstecken des Ladesteckers in die Ladeschnittstelle gekennzeichnet sein.

Die erfindungsgemäße Lösung bietet mehrere Vorteile. Zum einen wird durch die Zentrierung des Ladesteckers innerhalb des Werkzeugs erreicht, dass dann, wenn das Werkzeug relativ zu der Ladeschnittstelle positioniert wurde, auch mit einer ausreichenden Genauigkeit davon ausgegangen werden und / oder bestimmt werden kann, dass das Werkzeug ebenfalls in gewünschter Weise relativ zu dem Fahrzeug ausgerichtet wurde. Weiter wird durch das Zentrieren auch gewährleistet, dass der Ladestecker mit der Bewegungsachse in einer vorbestimmten und definierten Weise verlagerbar ist. Hierdurch können Kraftregelungen, die bisher aufgrund unbekannter Lage des Ladesteckers innerhalb des Werkzeugs zum Toleranzausgleich oftmals erforderlich sind, entfallen oder zumindest weniger präzise ausfallen. Auch kann das Werkzeug lediglich eine einzige Bewegungsachse umfassen, wobei prinzipiell aber auch mehr vorgesehen sein könnten. Zusammengefasst wird somit insbesondere durch Bereitstellen der Zentriermöglichkeit erreicht, dass mit wenigem oder zumindest wenig genauem Messaufwand und wenig komplex zu erzeugenden Bewegungen der Ladestecker zuverlässig in die Ladeschnittstelle automatisiert einsteckbar ist.

Im Detail wird eine Anordnung zum Verbinden eines Ladesteckers mit einer Ladeschnittstelle eines Fahrzeugs vorgeschlagen, mit den Merkmalen des beigefügten Anspruchs 1 und u.a. mit:
- einem Bewegungsapparat mit mehreren ansteuerbaren Bewegungsachsen;
- einem Werkzeug, das von dem Bewegungsapparat relativ zu dem Fahrzeug positionierbar ist und dazu eingerichtet ist, den Ladestecker zu halten, wobei das Werkzeug eine Zentriereinrichtung zum Zentrieren des Ladesteckers innerhalb des Werkzeugs und eine ansteuerbare Werkzeugbewegungsachse zum Bewegen des Ladesteckers unabhängig von den Bewegungsachsen des Bewegungsapparats umfasst;
wobei das Werkzeug mit dem darin zentrierten Ladestecker mittels des Bewegungsapparats in einer vorbestimmten Relativlage relativ zu der Ladeschnittstelle positionierbar ist und der Ladestecker anschließend (z.B. durch Bewegen) mittels der Werkzeugbewegungsachse mit der Ladeschnittstelle verbindbar bzw. in diese einsteckbar ist.

Bei dem Bewegungsapparat kann es sich um einen Industrieroboter und insbesondere einen Knickarmroboter handeln. Dieser kann sechs Bewegungsachsen in Form von aneinandergereihten Rotationsachsen umfassen. Allgemein können die Bewegungsachsen eine Kinematik des Bewegungsapparats definieren. Es kann sich hierbei um Linearachsen oder Rotationsachsen handeln, die jeweils eigene Antriebe (zum Beispiel elektrische Servomotoren) umfassen können. Innerhalb eines Bewegungsapparats können auch verschiedenartige Bewegungsachsen miteinander kombiniert werden, zum Beispiel können Kombinationen aus Linear- und Rotationsachsen vorgesehen sein.

Durch Ansteuern der Bewegungsachsen können diese in an sich bekannter Weise definierte Bewegungen ausführen und / oder definierte Positionen einnehmen. Das Werkzeug kann zum Beispiel an einer Werkzeugschnittstelle mit dem Bewegungsapparat verbunden sein. Allgemein können der Bewegungsapparat und insbesondere dessen Bewegungsachsen eine offene kinematische Kette definieren, an deren Ende das Werkzeug positionierbar ist.

Bevorzugt kann der Bewegungsapparat das Werkzeug mit beliebigen Orientierungen und in beliebigen Positionen relativ zu dem Fahrzeug anordnen, das heißt das Werkzeug um sämtliche Raumachsen und entlang sämtlicher Raumachsen bewegen. Dies ist aber nicht zwingend. Eine Bewegung um beziehungsweise entlang einer geringeren Anzahl von Raumachsen ist ebenso möglich.

Das Werkzeug kann relativ zu dem Bewegungsapparat und / oder dessen Werkzeugschnittstelle ortsfest sein und zum Beispiel mit einer definierten Ausrichtung daran befestigt werden. Je nach Stellung der Bewegungsachsen kann das Werkzeug aber in einem Basis-Koordinatensystem des Bewegungsapparats unterschiedliche Positionen und / oder Lagen einnehmen.

Der Ladestecker kann von dem Werkzeug mittels eines Halteabschnitts gehalten werden. Dieser Halteabschnitt kann ein Greifabschnitt sein, der zum Beispiel durch Bewegen von Greifelementen (zum Beispiel Greifbacken und / oder Greiffingern) einen vorbestimmten Abschnitt des Ladesteckers umgreifen kann. Alternativ kann der Halteabschnitt ohne bewegbare Greifelemente ausgebildet sein (insbesondere allgemein starr) und zum Beispiel auf einen geeigneten Abschnitt des Ladesteckers aufgeschoben werden. In diesem Fall ist der Halteabschnitt bevorzugt mit einer zylindrischen Ausnehmung versehen.

Der Halteabschnitt kann nachgiebig innerhalb des Werkzeugs gelagert sein und zum Beispiel nachgiebig mit der Bewegungsachse gekoppelt sein. Solange der Ladestecker aber mit der Zentriereinrichtung zusammenwirkt, kann auch der Halteabschnitt in dem Werkzeug zentriert sein. Anders ausgedrückt, kann der Halteabschnitt sozusagen mittelbar über den Ladestecker mit der Zentriereinrichtung verbunden und somit zentriert innerhalb des Werkzeugs positioniert sein, In diesem Zustand kann eine etwaige nachgiebige Lagerung nicht zum Tragen kommen.

Wenn aber der Ladestecker nicht mehr mit der Zentriereinrichtung wechselwirkt, zum Beispiel da er nicht mehr in diese eingreift, kann der Ladestecker vorzugsweise allein über den Haltegriff und die nachgiebige Lagerung mit dem Werkzeug verbunden sein. Über die nachgiebige Lagerung wird ein Toleranzausgleich bereitgestellt, wenn der Ladestecker über die Werkzeugbewegungsachse weiter verlagert wird. Wie nachstehend noch näher erläutert, kommt dies bevorzugt aber erst dann zum Tragen, wenn der Ladestecker bereits mit einem Führungsabschnitt der Ladeschnittstelle in Kontakt steht und somit während einer Bewegung durch die Werkzeugbewegungsachse zumindest teilweise geführt ist.

Gemäß einer Variante ist die nachgiebige Lagerung mit einer Mutter gekoppelt, die entlang einer Spindel linear verlagerbar ist. Diese Mutter-Spindel-Kombination kann von der Werkzeugbewegungsachse umfasst sein und in an sich bekannter Weise eine Rotationsbewegung der Spindel in eine Linearbewegung der Mutter übersetzen.

Bei der Werkzeugbewegungsachse kann es sich wiederum um eine ansteuerbare und insbesondere eine elektrisch, hydraulisch oder pneumatisch angetriebene Bewegungsachse handeln. Bevorzugt handelt es sich hierbei um eine Linearachse (das heißt eine Achse, die eine Linearbewegung hiermit gekoppelter Elemente erzeugt). Die Werkzeugbewegungsachse kann jedoch auch im Fall einer Linearachse an in sich bekannter Weise bewegbare Komponenten umfassen, die Rotationsbewegungen ausführen (zum Beispiel vorstehend erwähnte Spindel). Allgemein kann die Werkzeugbewegungsachse neben der bereits erwähnten Mutter-Spindel-Kombination alternativ auch Nocken, Gelenkverbindungen, Schwenkverbindungen oder dergleichen umfassen und / oder wenigstens einen Elektromotor zum Erzeugen der Bewegungskräfte.

Die Zentriereinrichtung kann feststehend innerhalb des Werkzeugs positioniert sein und einen vorbestimmten Bereich des Ladesteckers aufnehmen. Insbesondere kann dies zentrierend und / oder zwangsführend erfolgen, so dass dann der Ladestecker in einer gewünschten Weise innerhalb des Werkzeugs ausgerichtet und somit zentriert wird. Beispiele für die Zentriereinrichtung werden nachstehend noch näher erläutert.

Die Anordnung kann, zum Beispiel über einen vorstehend erwähnten Kamerasensor, eine räumliche Lage der Ladeschnittstelle ermitteln. Anschließend kann sie das Werkzeug und somit den darin zentrierten Ladestecker relativ zu der Ladeschnittstelle in einer vorbestimmten Weise positionieren. Infolgedessen kann der Ladestecker eine vorbestimmte Relativlage (das heißt, eine vorbestimmte Relativposition und eine vorbestimmte Relativorientierung) relativ zu der Ladeschnittstelle einnehmen.

Insbesondere kann sich die Relativlage dadurch auszeichnen, dass zum Verbinden des Ladesteckers und der Ladeschnittstelle nur noch eine Bewegung um und / oder entlang einer einzigen Raumachse erforderlich ist. Hierbei kann es sich um eine Raumachse handeln, um die oder entlang derer der Ladestecker mit der Werkzeugbewegungsachse bewegbar ist. Vorzugsweise handelt es sich hierbei um eine lineare Raumachse, entlang der der Ladestecker zum Verbinden bewegt werden muss. Diese Raumachse kann sich orthogonal zu der Ladeschnittstelle erstrecken.

Zum Verbinden mit der Ladeschnittstelle kann die Werkzeugbewegungsachse den Ladestecker anschließend verschieben und / oder translatorisch verlagern und somit in die Ladeschnittstelle bevorzugt vollständig und unter Herstellen eines elektrischen Kontaktes einstecken.

Bevorzugt umfasst das Erreichen der Relativlage ein In-Kontakt-Bringen des Ladesteckers mit einem Führungsabschnitt der Ladeschnittstelle. Der Führungsabschnitt kann ein mechanischer und / oder allgemein fester Abschnitt der Ladeschnittstelle sein (zum Beispiel ein Vorsprung). Insbesondere kann es sich hierbei um den Umfangsbereich einer sogenannten Ladedose und / oder Steckdose handeln, der einen die elektrischen Kontaktabschnitte der Ladeschnittstelle umlaufenden und in der Regel ringförmigen Bereich definiert. Der Führungsabschnitt kann den Ladestecker relativ zu einer Raumachse zentrieren und / oder wenigstens einen Abschnitt des Ladesteckers an mehreren Seiten oder auch vollständig umgeben. Hierdurch kann der Ladestecker relativ zu der Raumachse unverschieblich sein (d. h., relativ zu dieser zentriert werden oder in Position gehalten werden). Er kann aber zum Beispiel unter Führung durch den Führungsabschnitt entlang dieser Raumachse verschiebbar sein.

Durch diese Weiterbildung wird erreicht, dass eine Führungs- und / oder Zentrierfunktion von der Zentriereinrichtung auf den Führungsabschnitt der Ladeschnittstelle übergeben wird. Anschließend kann die Werkzeugbewegungsachse den Ladestecker unter Führung und insbesondere linearer Führung relativ zu der Ladeschnittstelle bewegen und insbesondere in diese einschieben, wobei das Zusammenwirken mit der Zentriereinrichtung aber vorzugsweise aufgelöst wird (zum Beispiel durch Auflösen eines mechanischen Eingriffs zwischen Ladestecker und Zentriereinrichtung). Hierdurch wird erreicht, dass der Ladestecker weitestgehend von nur einem Element (zum Beispiel Führungsabschnitt oder Zentrierabschnitt) zumindest während Verlagerungen geführt wird und somit mehrfache Zwangsführungen des Ladesteckers weitestgehend vermieden werden. Letzteres würde zwecks Toleranzausgleich unter Umständen komplexere Lagerungen des Ladesteckers innerhalb des Werkzeugs und / oder genauere Messverfahren während eines Positionierens oder Bewegens des Ladesteckers erfordern.

Allgemein kann erfindungsgemäß vorgesehen sein, dass das Werkzeug nur temporär den Ladestecker halten kann. Beispielsweise kann der Ladestecker temporär mit einem vorstehend erwähnten Halteabschnitt des Werkzeugs verbunden und dann von dem Werkzeug im Raum bewegt werden. Insbesondere nach Verbinden mit der Ladeschnittstelle kann der Ladestecker aber von dem Werkzeug gelöst werden. Hierzu kann beispielsweise eine Aufnahme des Ladesteckers im Werkzeug und / oder in einem Halteabschnitt hiervon aufgelöst werden.

Erfindungsgemäß ist die Zentriereinrichtung dazu eingerichtet, einen Formschluss mit dem Ladestecker herzustellen. Hierzu kann die Zentriereinrichtung wenigstens einen Aufnahmeabschnitt umfassen. In diesem kann ein entsprechend korrespondierend geformtes Gegenstück des Ladesteckers aufgenommen werden, vorzugsweise unter Herstellen der zentrierenden Wirkung beziehungsweise unter einer Zwangsführung des Ladesteckers durch die Zentriereinrichtung. Beispielsweise kann die Zentriereinrichtung eine Ausnehmung als Aufnahmeabschnitt umfassen, die einen Vorsprung des Ladesteckers zentrierend aufnimmt. Zusätzlich zu dem Formschluss kann aber auch ein Kraftschluss hergestellt werden, um die zentrierende Wirkung auch bei Erschütterungen oder unter dynamischen Bewegungskräften aufrechtzuerhalten. Dieser Kraftschluss kann jedoch derart bemessen sein, dass er durch die Werkzeugbewegungsachse wieder aufhebbar ist. Der Kraftschluss kann zum Beispiel durch elastisches Aufweiten eines Aufnahmeabschnitts der Zentriereinrichtung durch einen darin aufgenommenen Abschnitt des Ladesteckers hergestellt werden.

Allgemein kann der Aufnahmeabschnitt zumindest teilweise elastisch ausgebildet sein und unter Aufnehmen des Ladesteckers elastisch verformbar sein. Auch hierdurch kann ein Formschluss und / oder ein Kraftschluss der vorstehend erläuterten Art hergestellt werden.

Wie erwähnt, kann es sich bei der Werkzeugbewegungsachse um eine Linearachse handeln. Erfindungsgemäß ist die Werkzeugbewegungsachse dazu eingerichtet sein, den Ladestecker relativ zu der vorzugsweise feststehenden Zentriereinrichtung zu bewegen. In diesem Zusammenhang ist vorgesehen, dass die Werkzeugbewegungsachse dazu eingerichtet ist, beim Bewegen des Ladesteckers in einer ersten Richtung (die vorzugsweise von der Ladeschnittstelle weggerichtet ist), den Ladestecker mit der Zentriereinrichtung zu verbinden (zum Beispiel durch In-Eingriff-Bringen hiermit). Bei einem Bewegen in eine zweite Richtung, die vorzugsweise der ersten Richtung entgegengesetzt ist und zum Beispiel in Richtung der Ladeschnittstelle verläuft, kann die Werkzeugbewegungsachse den Ladestecker von der Zentriereinrichtung lösen. Dies kann durch Lösen eines Kontakts und / oder Eingriffs zwischen dem Ladestecker und der Zentriereinrichtung erfolgen, beispielsweise da der Stecker sozusagen aus der bevorzugt feststehenden Zentriereinrichtung gelöst beziehungsweise von dieser abgehoben wird.

Die Erfindung betrifft auch ein Werkzeug zum Verbinden eines Ladesteckers mit einer Ladeschnittstelle eines Fahrzeugs, wobei das Werkzeug prinzipiell gemäß jeglichem und insbesondere im Zusammenhang mit der Anordnung geschilderten Aspekt ausgebildet sein kann. Insbesondere kann vorgesehen sein, dass das Werkzeug dazu eingerichtet ist, den Ladestecker zu halten. Weiter umfasst das Werkzeug bevorzugt eine Zentriereinrichtung zum Zentrieren des Ladesteckers innerhalb des Werkzeugs sowie eine ansteuerbare Werkzeugbewegungsachse zum Bewegen des Ladesteckers, wobei das Werkzeug ferner dazu eingerichtet ist, den Ladestecker mittels der Werkzeugbewegungsachse mit der Ladeschnittstelle zu verbinden.

Es versteht sich, dass sämtliche hierin geschilderten Merkmale, Weiterbildungen, Funktionen und Wechselwirkungen im Zusammenhang mit dem Werkzeug bei diesem entsprechend vorgesehen sein können, auch unabhängig von den weiteren Details der Anordnung und / oder des Verfahrens. Anders ausgedrückt, können sämtliche hierin geschilderten Werkzeugmerkmale und Werkzeugfunktionen in den beigefügten unabhängigen Werkzeug-Anspruch aufgenommen werden.

Die Erfindung betrifft auch ein Verfahren zum Verbinden eines Ladesteckers mit einer Ladeschnittstelle eines Fahrzeugs, mit den Merkmalen des beigefügten Anspruchs 7 und u.a. mit:
- Bereitstellen eines Bewegungsapparats mit mehreren ansteuerbaren Bewegungsachsen;
- Bereitstellen eines Werkzeugs, das von dem Bewegungsapparat relativ zu dem Fahrzeug positionierbar ist und dazu eingerichtet ist, den Ladestecker zu halten, wobei das Werkzeug eine Zentriereinrichtung zum Zentrieren des Ladesteckers innerhalb des Werkzeugs und eine ansteuerbare Werkzeugbewegungsachse zum Bewegen des Ladesteckers unabhängig von den Bewegungsachsen des Bewegungsapparats umfasst;
- Positionieren des Werkzeugs mit dem darin zentrierten Ladestecker mittels des Bewegungsapparats in einer vorbestimmten Relativlage relativ zu der Ladeschnittstelle; und anschließend
- Verbinden des Ladesteckers mit der Ladeschnittstelle mittels der Werkzeugbewegungsachse.

Das Verfahren kann von einer Anordnung jeglicher hierin geschilderten Art ausgeführt werden. Allgemein kann das Verfahren sämtliche weiteren Merkmale, Schritte, Varianten und Weiterbildungen umfassen, um sämtliche hierin geschilderten Funktionen, Betriebszustände, Wechselwirkungen und Effekte zu erreichen. Insbesondere können sämtliche Erläuterungen zu den Merkmalen der Anordnung und / oder des Werkzeugs auch bei gleichlautenden Verfahrensmerkmalen vorgesehen sein beziehungsweise auf diese zutreffen.

Beispielsweise kann das Verfahren einen weiteren Schritt des Lösens des Werkzeugs von dem Ladestecker nach Verbinden mit der Ladeschnittstelle umfassen und / oder des In- Kontakt-Bringens des Ladesteckers mit einem Führungsabschnitt der Ladeschnittstelle bei Erreichen der Relativlage.

Die Erfindung wir im Folgenden anhand der beigefügten schematischen Figuren erläutert. Gleichartige oder gleichwirkende Merkmale können dabei figurenübergreifend mit den gleichen Bezugszeichen versehen sein.
- Figur 1: zeigt eine stark vereinfachte schematische Darstellung einer erfindungsgemäßen Anordnung gemäß einem Ausführungsbeispiel, die ein erfindungsgemäßes Verfahren ausführt;
- Figur 2: zeigt ein Werkzeug der Anordnung aus Figur 1 in einer Detailansicht und in einem ersten Betriebszustand, bei der das Werkzeug und insbesondere ein hiervon gehaltener Ladestecker mittels eines Roboters der Anordnung positioniert wird;
- Figur 3: zeigt das Werkzeug in einer zu Figur 1 analogen Darstellung aber in einem zweiten Betriebszustand, bei dem der Ladestecker mittels einer Bewegungsachse des Werkzeugs verlagert wurde;
- Figur 4: zeigt ein Ablaufschema eines Verfahrens, dass mit der Anordnung aus Figur 1 ausführbar ist.

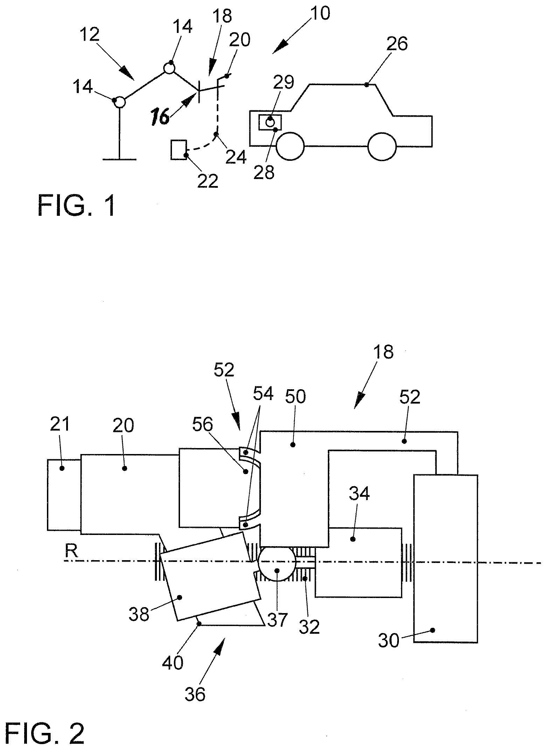

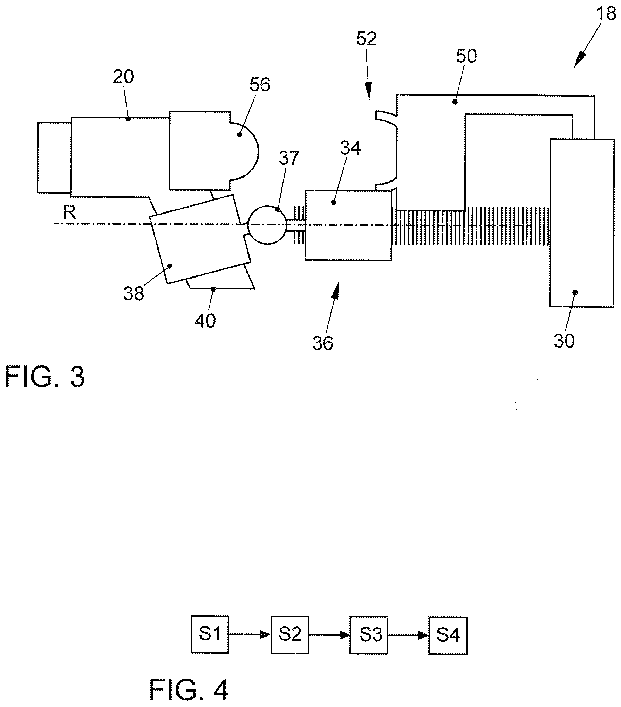

In Figur 1 ist eine stark vereinfachte Darstellung einer erfindungsgemäßen Anordnung 10 gezeigt. Diese umfasst einen Bewegungsapparat (Industrieroboter 12), der in an sich bekannter Weise als ein Knickarmroboter ausgebildet ist. Der Industrieroboter 12 umfasst demnach mehrere Bewegungsachsen 14, von denen lediglich beispielhaft zwei dargestellt und die als Rotationsachsen ausgebildet sind. In an sich bekannter Weise kann hierüber eine Werkzeugschnittstelle 16 im Raum positioniert werden. An der Werkzeugschnittstelle 16 ist ein nachfolgend anhand der Figuren 2 und 3 erläutertes Werkzeug 18 angeordnet. Das Werkzeug 18 hält einen Ladestecker 20, der mit einer Energieversorgung 22 zum Beispiel über ein strichliert angedeutetes Kabel 24 verbunden ist.

Der Industrieroboter 12, ist prinzipiell dazu eingerichtet, das Werkzeug 18 samt darin gehaltenem Ladestecker 20 gemeinsam zu bewegen und insbesondere relativ zu einem schematisch angedeuteten Fahrzeug 26 zu bewegen.

Das Fahrzeug 26 umfasst eine Ladeschnittstelle 28 in Form einer Steckdose. In diese kann der Ladestecker 20 unter Herstellen eines elektrischen Kontaktes eingesteckt werden, um Energie aus der Energieversorgung 22 in einen nicht dargestellten Energiespeicher des Fahrzeugs 26 elektrisch zu übertragen. Dieses Einstecken erfolgt in der Regel manuell, soll jedoch vorliegend von dem Industrieroboter 12 durchgeführt werden.

In Figur 2 ist das Werkzeug 18 in einer Detaildarstellung gezeigt. Das Werkzeug 18 umfasst ein Basiselement 30, in dem eine Spindel 32 drehbar gelagert ist. Nicht dargestellt ist, dass das Basisteil 30 auch einen Servomotor zum rotatorischen Antreiben der Spindel 32 umfasst. Eine Rotationsachse R der Spindel 32 ist in Figur 2 strichliert angedeutet.

An der Spindel 32 ist eine Mutter 34 angeordnet. Diese kann in an sich bekannter Weise durch Rotieren der Spindel 32 linear entlang der Rotationsachse R verlagert werden. Die Mutter-Spindel-Kombination 32, 34 bildet somit eine lineare Werkzeugbewegungs-achse 36.

Die Mutter 34 ist über ein Gelenk 36 (zum Beispiel ein Festkörpergelenk) mit einem Halteabschnitt 38 verbunden. Wie nachstehend noch erläutert, ist der Halteabschnitt 38 über das Gelenk 37 nachgiebig innerhalb des Werkzeugs 38 und in dem gezeigten Fall an der Mutter 34 und somit an der linearen Bewegungsachse 36 gelagert.

Der Halteabschnitt 38 umfasst eine nicht dargestellte zylindrische Ausnehmung, wobei sich eine Zylinderlängsachse in der Blattebene erstreckt und schräg zu der Rotationsachse R verläuft. In dieser nicht gezeigten Ausnehmung ist ein Griffabschnitt 40 des Ladesteckers 20 eingeschoben. Hierfür kann der Roboter den Halteabschnitt 38 auf den Griffabschnitt 40 aufschieben, beispielsweise um den Ladestecker 20 von der Energieversorgung 22 oder aus einer anderen definierten Anfangsposition ab- beziehungsweise anzuheben.

Um Kollisionen mit der Spindel 32 zu vermeiden, kann der Halteabschnitt 38 in Figur 2 näher am Betrachter als die Spindel 32 positioniert sein (das Gelenk 37 würde sich dann ausgehend von der Mutter 34 schräg nach vorn in Richtung des Betrachters erstrecken).

Es ist somit prinzipiell ersichtlich, dass durch lineares Verlagern der Mutter 34 auch der Halteabschnitt 38 und somit der Ladestecker 20 linear verlagert werden kann.

In Figur 2 ist ferner eine Zentriereinrichtung 50 des Werkzeugs 18 gezeigt. Diese ist fest innerhalb des Werkzeugs 18 positioniert, wie durch einen Verbindungsarm 52 zum Basisteil 30 angedeutet. Die Zentriereinrichtung 50 ist allgemein dazu eingerichtet, den Ladestecker 20 gemäß einer vorbestimmten Relativposition und -orientierung innerhalb des Werkzeugs 18 zu zentrieren. Hierfür umfasst die Zentriereinrichtung 50 in dem gezeigten Beispiel einen Aufnahmeabschnitt 52. Dieser ist mit zwei vorspringenden elastischen Armen 54 ausgebildet, die zwischen sich einen entsprechenden Aufnahmebereich der Zentriereinrichtung 50 definieren. Es ist auch möglich, einen umlaufenden ringförmigen Abschnitt vorzusehen, das heißt die Arme 54 könnten auch einer Querschnittsdarstellung durch einen entsprechenden umlaufenden Ringabschnitt entsprechen.

In dem von den Armen 54 begrenzten Aufnahmeabschnitt 52 ist ein korrespondierend geformtes Gegenstück 56 des Ladesteckers 20 aufgenommen. Dies geschieht, wenn auch in Figur 2 nicht eindeutig dargestellt, vorzugsweise unter Bilden eines Formschlusses. Zusätzlich kann vorzugsweise auch ein Reibschluss gebildet werden, zum Beispiel durch elastisches Aufweiten der Arme 54.

Beim Anordnen beziehungsweise In-Eingriff-Bringen des Gegenstücks 56 und der Zentriereinrichtung 50 wird der Ladestecker 20 somit bevorzugt um und entlang sämtliche(r) Raumachsen zentriert, zumindest aber relativ und vor allem quer zu der Rotationsachse R. Hierbei ist es vorteilhaft, wenn das Gelenk 36 vorgesehen ist, das in diesem Prozess zu einem Toleranzausgleich dient.

Das In-Eingriff-Bringen kann mittels der Werkzeugbewegungsachse 36 ausgeführt werden, beispielsweise durch Verlagern des Ladesteckers 20 aus der in Figur 3 gezeigten Position in die in Figur 2 gezeigte Position. Der Vollständigkeit halber ist darauf hinzuweisen, dass die in Figur 3 gezeigte Position auch einer Position entsprechen kann, in dem der Ladestecker 20 erstmals von dem Halteabstand 38 gegriffen beziehungsweise aufgenommen wurde.

Wurde der in Figur 2 gezeigte Zustand erreicht, kann der Industrieroboter 12 das Werkzeug 30 und aufgrund der Zentrierung auch den Ladestecker 20 in einer vorbestimmten Relativlage relativ zu der Ladeschnittstelle 28 positionieren.

Nicht gezeigt ist, dass die Anordnung 10 hierfür auch einen Sensor umfassen kann, um die Lage der Ladeschnittstelle 28 zumindest grob zu erfassen. Hierbei kann es sich zum Beispiel um einen Kamerasensor handeln, der an dem Roboter 12 angebracht oder auch ortsfest in einem Arbeitsraum der Anordnung 10 positioniert sein kann.

In dem gezeigten Beispiel wird die gewünschte Relativlage von Ladestecker 20 zur Ladeschnittstelle 28 dann erreicht, wenn ein vorderster Einsteckabschnitt 21 des Ladesteckers 20 (siehe Figur 2) in einem aufnehmenden Ringabschnitt der Ladeschnittstelle 28 aufgenommen ist. Bei diesem Ringabschnitt kann es sich um einen herkömmlichen umlaufenden Abschnitt nach Art einer Steckdose handeln. Bevorzugt ist, dass der Aufnahmeabschnitt der Ladeschnittstelle 28 den Ladestecker 20 beziehungsweise dessen Lage zumindest in Bezug auf die Rotationsachse R zentriert.

Beispielsweise kann dieser Abschnitt ein in Figur 1 angedeuteter aus der Blattebene hervorstehender Führungsabschnitt 29 sein, der Bewegungen des Ladesteckers 20 in Richtung quer zur Rotationsachse R unterdrückt, aber Bewegungen entlang der Rotationsachse R ermöglicht. Folglich kann es sich also um einen linearen Führungsabschnitt 29 handeln, der lineare Bewegungen des Ladesteckers 20 entlang der Rotationsachse R und somit auch entlang einer Verschiebungsachse der Werkzeugbewegungsachse 36 festlegt beziehungsweise aufrechterhält.

Nach Einschieben in den Führungsabschnitt 29 mittels des Industrieroboters 12 kann somit jede weitere Verlagerung des Ladesteckers 20 entlang der Rotationsachse R durch den Führungsabschnitt 29 zwangsgeführt werden oder zumindest eine Verlagerung weiter in Richtung der Ladeschnittstelle 28.

Anschließend können die Bewegungsachsen 14 des Industrieroboters 12 stillstehen beziehungsweise blockiert werden. Weitere Bewegungen des Ladesteckers 20 zum Herstellen einer vollständigen Verbindung mit der Ladeschnittstelle 28 können dann vorzugsweise ausschließlich mittels der Bewegungsachse 36 ausgeführt werden. Genauer gesagt wird dann die Spindel 32 rotatorisch angetrieben und die Mutter 34 in Figur 2 nach links verlagert. Hierdurch wird der in Figur 3 gezeigte Zustand erreicht.

Man erkennt, dass das Gegenstück 56 von der Zentriereinrichtung 50 abgehoben wurde und somit der Eingriff in den Zentrierabschnitt 52 aufgehoben ist. Die Führungswirkung wird dann in der vorstehend geschilderten Weise von dem linearen Führungsabschnitt 29 der Ladeschnittstelle 28 übernommen. Innerhalb des Werkzeugs 18 ist der Ladestecker 20 hingegen nicht mehr zentriert, sondern über das Gelenk 37 bewusst nachgiebig gelagert. Hierdurch können Toleranzen ausgeglichen und erhöhte Gegenkräfte während einer linearen Verschiebung des Ladesteckers 20 zumindest teilweise ausgeglichen werden.

In dem in Figur 3 gezeigten Zustand wurde der Ladestecker 20 bereits vollständig in die dort nicht gesondert dargestellte Ladeschnittstelle 28 beziehungsweise dessen Führungsabschnitt 29 eingeschoben. Die maximale Einstecktiefe in die Ladeschnittstelle 28 wurde erreicht und das Verbinden von Ladestecker 20 und Ladeschnittstelle 28 ist abgeschlossen (das heißt, der gewünschte elektrische Kontakt hierzwischen wurde vollständig hergestellt). Durch Bewegen des Roboters 12 kann das Werkzeug 18 von dem Ladestecker 20 gelöst werden, zum Beispiel durch Abstreifen des Halteabstands 38 von dem Griffabschnitt 40 des Ladesteckers 20. Eine Positionierung des Kabels 24 an dem Ladestecker 20 wäre entsprechend zu wählen, damit dieses kein Hindernis darstellt (zum Beispiel durch Anordnen an einer Oberseite des Ladesteckers 20).

Das Werkzeug 18 kann anschließend dazu verwendet werden, um einen Ladestecker 20 einer anderen Energieversorgungseinrichtung 22 aufzunehmen und mit einer Ladeschnittstelle 28 eines weiteren Fahrzeugs 26 zu verbinden.

In Figur 4 ist ein Ablaufschema eines erfindungsgemäßen Verfahrens dargestellt. In einem Schritt S1 wird der Ladestecker 20 von dem Werkzeug 18 gegriffen beziehungsweise angehoben. Hierbei nimmt das Werkzeug vorzugsweise einen Zustand analog zu demjenigen aus Figur 3 ein. In einem Schritt S2 wird der Ladestecker 20 innerhalb des Werkzeugs 18 zentriert. Hierfür wird der Ladestecker 20 mittels der Werkzeugbewegungsachse 36 von dem Zustand aus Figur 3 in den Zustand aus Figur 2 verlagert.

In einem Schritt S3, der prinzipiell auch vor den bisher genannten Schritten und / oder zumindest teilweise parallel hierzu ausgeführt werden kann, wird eine Lage der Ladeschnittstelle 28 des Fahrzeugs 26 zumindest grob erfasst. Der Industrieroboter 12 ordnet dann den zentrierten Ladestecker 20 durch Positionieren des Werkzeugs 18 gemäß einer vorgeschriebenen Relativlage relativ zu der Ladeschnittstelle 28 an. Hierfür schiebt er in der vorstehend geschilderten Weise den vorderen Abschnitt 21 des Ladesteckers 20 in die Führungsabschnitte 29 der Ladeschnittstelle 28 zumindest teilweise ein. In einem Schritt S4 wird dann die Werkzeugbewegungsachse 36 aktiviert und verlagert den Ladestecker 20 aus dem in Figur 2 gezeigten Zustand in den in Figur 3 gezeigten Zustand. Hierdurch wird der Ladestecker 20 vollständig in die Ladeschnittstelle 28 eingeschoben, wobei die Bewegung linear durch den Führungsabschnitt 29 geführt wird und über das Gelenk 37 bevorzugt der Toleranzausgleich bereitgestellt wird.

### Bezugszeichenliste

- 10: Anordnungen
- 12: Industrieroboter
- 14: Bewegungsachse
- 16: Werkzeugschnittstelle
- 18: Werkzeug
- 20: Ladestecker
- 22: Energieversorgungseinrichtung
- 24: Kabel
- 26: Fahrzeug
- 28: Ladeschnittstelle
- 29: Führungsabschnitt
- 21: Kontaktabschnitt
- 30: Basisteil
- 32: Spindel
- 34: Mutter
- 36: Werkzeugbewegungsachse
- 37: Gelenk
- 38: Halteabschnitt
- 40: Griffabschnitt
- 50: Zentriereinrichtung
- 52: Aufnahmeabschnitt
- 54: Arme
- 56: Gegenstück

## Patentansprüche

1. Anordnung (10) zum Verbinden eines Ladesteckers (20) mit einer Ladeschnittstelle (28) eines Fahrzeugs (26), mit:
- einem Bewegungsapparat (12) mit mehreren ansteuerbaren Bewegungsachsen (14);
- einem Werkzeug (18), das von dem Bewegungsapparat (12) relativ zu dem Fahrzeug (26) positionierbar ist und dazu eingerichtet ist, den Ladestecker (20) zu halten, wobei das Werkzeug (18) eine Zentriereinrichtung (50) zum Zentrieren des Ladesteckers (20) innerhalb des Werkzeugs (18) und eine ansteuerbare Werkzeugbewegungsachse (36) zum Bewegen des Ladesteckers (20) unabhängig von den Bewegungsachsen (14) des Bewegungsapparats (12) umfasst;
wobei das Werkzeug (18) mit dem darin zentrierten Ladestecker (20) mittels des Bewegungsapparats (12) in einer vorbestimmten Relativlage relativ zu der Ladeschnittstelle (28) positionierbar ist und der Ladestecker (20) anschließend mittels der Werkzeugbewegungsachse (36) mit der Ladeschnittstelle (28) verbindbar ist, **dadurch gekennzeichnet, dass**
die Zentriereinrichtung (50) dazu eingerichtet ist, einen Formschluss mit dem Ladestecker (20) herzustellen und die Werkzeugbewegungsachse (36) eingerichtet ist, den Ladestecker (20) relativ zu der Zentriereinrichtung (50) zu bewegen und bei einem Bewegen des Ladesteckers (20) in einer ersten Richtung diesen mit der Zentriereinrichtung (50) unter Ausbildung des Formschlusses zu verbinden und bei einem Bewegen in eine zweite Richtung diesen von der Zentriereinrichtung (50) unter Auflösen des Formschlusses zu lösen.

2. Anordnung (10) nach Anspruch 1,
**dadurch gekennzeichnet, dass** das Werkzeug (18) von dem Ladestecker (20) nach Verbinden mit der Ladeschnittstelle (28) lösbar ist.

3. Anordnung nach einem der vorangehenden Ansprüche,
**dadurch gekennzeichnet, dass** das Erreichen der Relativlage ein In-Kontakt-Bringen des Ladesteckers (2) mit einem Führungsabschnitt (29) der Ladeschnittstelle (28) umfasst.

4. Anordnung (10) nach einem der vorangehenden Ansprüche,
**dadurch gekennzeichnet, dass** das Werkzeug (18) einen Halteabschnitt (38) für den Ladestecker (20) umfasst, der nachgiebig an der Werkzeugbewegungsachse (36) gelagert ist.

5. Anordnung (10) nach einem der vorangehenden Ansprüche,
**dadurch gekennzeichnet, dass** die Werkzeugbewegungsachse (36) eine Linearachse ist.

6. Werkzeug (18) zum Verbinden eines Ladesteckers (20) mit einer Ladeschnittstelle (28) eines Fahrzeugs (26),
wobei das Werkzeug (18), das von einem Bewegungsapparat (12) relativ zu dem Fahrzeug (26) positionierbar ist, eingerichtet ist, den Ladestecker (20) zu halten, und eine Zentriereinrichtung (50) zum Zentrieren des Ladesteckers (20) innerhalb des Werkzeugs (18) sowie eine ansteuerbare Werkzeugbewegungsachse (36) zum Bewegen des Ladesteckers (20) umfasst;
wobei das Werkzeug (18) dazu eingerichtet ist, den Ladestecker (20) mittels der Werkzeugbewegungsachse (36) mit der Ladeschnittstelle (28) zu verbinden,
**dadurch gekennzeichnet, dass**
die Zentriereinrichtung (50) dazu eingerichtet ist, einen Formschluss mit dem Ladestecker (20) herzustellen und die Werkzeugbewegungsachse (36) eingerichtet ist, den Ladestecker (20) relativ zu der Zentriereinrichtung (50) zu bewegen und bei einem Bewegen des Ladesteckers (20) in einer ersten Richtung diesen mit der Zentriereinrichtung (50) unter Ausbildung des Formschlusses zu verbinden und bei einem Bewegen in eine zweite Richtung diesen von der Zentriereinrichtung (50) unter Auflösen des Formschlusses zu lösen.

7. Verfahren zum Verbinden eines Ladesteckers (20) mit einer Ladeschnittstelle (28) eines Fahrzeugs (26), umfassend:
- Bereitstellen eines Bewegungsapparats (12) mit mehreren ansteuerbaren Bewegungsachsen (14);
- Bereitstellen eines Werkzeugs (18), das von dem Bewegungsapparat (12) relativ zu dem Fahrzeug (26) positionierbar ist und dazu eingerichtet ist, den Ladestecker (20) zu halten, wobei das Werkzeug (18) eine Zentriereinrichtung (50) zum Zentrieren des Ladesteckers (20) innerhalb des Werkzeugs (18) und eine ansteuerbare Werkzeugbewegungsachse (36) zum Bewegen des Ladesteckers (20) unabhängig von den Bewegungsachsen (14) des Bewegungsapparats (12) und relativ zu der Zentriereinrichtung (20) umfasst;
- Positionieren des Werkzeugs (18) mit dem darin zentrierten Ladestecker (20) mittels des Bewegungsapparats (12) in einer vorbestimmten Relativlage relativ zu der Ladeschnittstelle (28); und anschließend
- Verbinden des Ladesteckers (20) mit der Ladeschnittstelle (28) mittels der Werkzeugbewegungsachse (36)
**dadurch gekennzeichnet, dass**
die Zentriereinrichtung (50) dazu eingerichtet ist, einen Formschluss mit dem Ladestecker (20) herzustellen und das Verbinden des Ladesteckers (20) mit der Ladeschnittstelle (28) ein Bewegen des Ladesteckers (20) in Richtung der Ladeschnittstelle (28) mittels der Werkzeugbewegungsachse (36) unter Auflösen des Formschlusses umfasst, wobei die Werkzeugbewegungsachse (36) ferner dazu eingerichtet ist, den Ladestecker (20) auch in eine weitere Richtung zum Verbinden mit der Zentriereinrichtung (50) unter Herstellung des Formschlusses zu bewegen.

## Claims

1. Arrangement (10) for connecting a charging connector (20) to a charging interface (28) of a vehicle (26), having:
- a movement apparatus (12) having a plurality of controllable movement axes (14);
- a tool (18) which can be positioned relative to the vehicle (26) by the movement apparatus (12) and is set up to hold the charging connector (20), wherein the tool (18) comprises a centring device (50) for centring the charging connector (20) within the tool (18) and a controllable tool movement axis (36) for moving the charging connector (20) independently of the movement axes (14) of the movement apparatus (12) ;
wherein the tool (18) with the charging connector (20) centred therein can be positioned in a predetermined relative position relative to the charging interface (28) by means of the movement apparatus (12), and the charging connector (20) can then be connected to the charging interface (28) by means of the tool movement axis (36), **characterized in that**
the centring device (50) is set up to produce a positive connection to the charging connector (20) and the tool movement axis (36) is set up to move the charging connector (20) relative to the centring device (50) and, during a movement of the charging connector (20) in a first direction, to connect the latter to the centring device (50), forming the positive connection, and, during a movement in a second direction, to release the latter from the centring device (50), releasing the positive connection.

2. Arrangement (10) according to Claim 1, **characterized in that** the tool (18) can be released from the charging connector (20) following the connection to the charging interface (28).

3. Arrangement according to one of the preceding claims,
**characterized in that** reaching the relative position comprises bringing the charging connector (2) into contact with a guide portion (29) of the charging interface (28).

4. Arrangement (10) according to one of the preceding claims,
**characterized in that** the tool (18) comprises a holding portion (38) for the charging connector (20), which is resiliently mounted on the tool movement axis (36).

5. Arrangement (10) according to one of the preceding claims,
**characterized in that** the tool movement axis (36) is a linear axis.

6. Tool (18) for connecting a charging connector (20) to a charging interface (28) of a vehicle (26),
wherein the tool (18), which can be positioned relative to the vehicle (26) by a movement apparatus (12), is set up to hold the charging connector (20), and comprises a centring device (50) for centring the charging connector (20) within the tool (18) and a controllable tool movement axis (36) for moving the charging connector (20) ;
wherein the tool (18) is set up to connect the charging connector (20) to the charging interface (28) by means of the tool movement axis (36),
**characterized in that**
the centring device (50) is set up to produce a positive connection to the charging connector (20) and the tool movement axis (36) is set up to move the charging connector (20) relative to the centring device (50) and, during a movement of the charging connector (20) in a first direction, to connect the latter to the centring device (50), forming the positive connection, and, during a movement in a second direction, to release the latter from the centring device (50), releasing the positive connection.

7. Method for connecting a charging connector (20) to a charging interface (28) of a vehicle (26), comprising:
- providing a movement apparatus (12) having a plurality of controllable movement axes (14);
- providing a tool (18) which can be positioned relative to the vehicle (26) by the movement apparatus (12) and is set up to hold the charging connector (20), wherein the tool (18) comprises a centring device (50) for centring the charging connector (20) within the tool (18) and a controllable tool movement axis (36) for moving the charging connector (20) independently of the movement axes (14) of the movement apparatus (12) and relative to the centring device (20);
- positioning the tool (18) with the charging connector (20) centred therein in a predetermined relative position relative to the charging interface (28) by means of the movement apparatus (12); and then
- connecting the charging connector (20) to the charging interface (28) by means of the tool movement axis (36),
**characterized in that**
the centring device (50) is set up to produce a positive connection to the charging connector (20), and the connection of the charging connector (20) to the charging interface (28) comprises moving the charging connector (20) in the direction of the charging interface (28) by means of the tool movement axis (36), releasing the positive connection, wherein the tool movement axis (36) is further set up also to move the charging connector (20) in a further direction for the connection to the centring device (50), producing the positive connection.

## Revendications

1. Agencement (10) pour connecter une prise de charge (20) à une interface de charge (28) d'un véhicule (26), comprenant :
- un appareil de déplacement (12) avec plusieurs axes de déplacement (14) aptes à être commandés ;
- un outil (18) qui est apte à être positionné par l'appareil de déplacement (12) par rapport au véhicule (26) et qui est conçu pour maintenir la prise de charge (20), l'outil (18) comprenant un dispositif de centrage (50) pour centrer la prise de charge (20) à l'intérieur de l'outil (18) et un axe (36) de déplacement d'outil apte à être commandé pour déplacer la prise de charge (20) indépendamment des axes de déplacement (14) de l'appareil de déplacement (12) ;
l'outil (18) avec la prise de charge (20) centrée en lui étant apte à être positionné au moyen de l'appareil de déplacement (12) dans une position relative prédéterminée par rapport à l'interface de charge (28) et la prise de charge (20) étant ensuite apte à être connectée à l'interface de charge (28) au moyen de l'axe (36) de déplacement d'outil,
**caractérisé en ce que**
le dispositif de centrage (50) est conçu pour réaliser une liaison par complémentarité de forme avec la prise de charge (20)
et l'axe (36) de déplacement d'outil est agencé pour déplacer la prise de charge (20) par rapport au dispositif de centrage (50) et, lors d'un déplacement de la prise de charge (20) dans une première direction, pour la connecter au dispositif de centrage (50) en formant la liaison par complémentarité de forme et, lors d'un déplacement dans une deuxième direction, pour la libérer du dispositif de centrage (50) en rompant la liaison par complémentarité de forme.

2. Agencement (10) selon la revendication 1, **caractérisé en ce que** l'outil (18) est apte à être détaché de la prise de charge (20) après connexion à l'interface de charge (28).

3. Agencement selon l'une des revendications précédentes,
**caractérisé en ce que** l'obtention de la position relative comprend une mise en contact de la prise de charge (2) avec une section de guidage (29) de l'interface de charge (28) .

4. Agencement (10) selon l'une des revendications précédentes,
**caractérisé en ce que** l'outil (18) comprend une partie de maintien (38) pour la prise de charge (20) qui est montée de manière souple sur l'axe (36) de déplacement d'outil.

5. Agencement (10) selon l'une des revendications précédentes,
**caractérisé en ce que** l'axe (36) de déplacement d'outil est un axe linéaire.

6. Outil (18) pour connecter une prise de charge (20) à une interface de charge (28) d'un véhicule (26), l'outil (18), qui est apte à être positionné par un appareil de déplacement (12) par rapport au véhicule (26), étant conçu de façon à maintenir la prise de charge (20) et comprenant un dispositif de centrage (50) pour centrer la prise de charge (20) à l'intérieur de l'outil (18) ainsi qu'un axe (36) de déplacement d'outil apte à être commandé pour déplacer la prise de charge (20) ; l'outil (18) étant conçu pour connecter la prise de charge (20) à l'interface de charge (28) au moyen de l'axe (36) de déplacement d'outil,
**caractérisé en ce que**
le dispositif de centrage (50) est conçu pour réaliser une liaison par complémentarité de forme avec la prise de charge (20) et l'axe (36) de déplacement d'outil est conçu pour déplacer la prise de charge (20) par rapport au dispositif de centrage (50) et, lors d'un déplacement de la prise de charge (20) dans une première direction, pour la connecter au dispositif de centrage (50) en formant la liaison par complémentarité de forme et, lors d'un déplacement dans une deuxième direction, pour la libérer du dispositif de centrage (50) en rompant la liaison par complémentarité de forme.

7. Procédé de connexion d'une prise de charge (20) à une interface de charge (28) d'un véhicule (26), comprenant :
- la mise à disposition d'un appareil de déplacement (12) avec plusieurs axes de déplacement (14) aptes à être commandés ;
- la mise à disposition d'un outil (18) qui est apte à être positionné par l'appareil de déplacement (12) par rapport au véhicule (26) et qui est adapté pour maintenir la prise de charge (20), l'outil (18) comprenant un dispositif de centrage (50) pour centrer la prise de charge (20) à l'intérieur de l'outil (18) et un axe (36) de déplacement d'outil apte à être commandé de façon à déplacer la prise de charge (20) indépendamment des axes de déplacement (14) de l'appareil de déplacement (12) et par rapport au dispositif de centrage (20) ;
- le positionnement de l'outil (18) avec la prise de charge (20) centrée en lui au moyen de l'appareil de déplacement (12) dans une position relative prédéterminée par rapport à l'interface de charge (28) ; et ensuite
- la connexion de la prise de charge (20) à l'interface de charge (28) au moyen de l'axe (36) de déplacement d'outil,
**caractérisé en ce que**
le dispositif de centrage (50) est conçu pour établir une liaison par complémentarité de forme avec la prise de charge (20) et la connexion de la prise de charge (20) à l'interface de charge (28) comprend un déplacement de la prise de charge (20) en direction de l'interface de charge (28) au moyen de l'axe (36) de déplacement d'outil en supprimant la liaison par complémentarité de forme, l'axe (36) de déplacement d'outil étant en outre conçu pour déplacer la prise de charge (20) également dans une autre direction pour la liaison avec le dispositif de centrage (50) en établissant la liaison par complémentarité de forme.
